# NEUE EUROPÄISCHE PATENTSCHRIFT

(11) **EP 0 548 789 B2**
(45) Veröffentlichungstag und Bekanntmachung des Hinweises auf die Entscheidung über den Einspruch: **03.03.1999**
(45) Hinweis auf die Patenterteilung: 01.03.1995
(21) Anmeldenummer: 92121449.0
(22) Anmeldetag: 17.12.1992
(51) Int. Cl.: C09G 1/16, C09G 1/04, C08J 3/07, C08J 3/03, C08L 83/04

(54) **Pflegemittel für harte Oberflächen**
Polish for hard surfaces
Produit d'entretien pour surfaces dures

(30) Priorität: 20.12.1991 DE 4142387
(43) Veröffentlichungstag der Anmeldung: 30.06.1993
(73) Patentinhaber: WACKER-CHEMIE GMBH, D-81737 München (DE)
(72) Erfinder: Sejpka, Johann, Dr., W-8261 Martl (DE); Wimmer, Franz, W-8263 Burghausen (DE); Schmidt, Annemarie, W-8261 Perach (DE)

(56) Entgegenhaltungen:
- EP-A- 518 555
- EP-A- 0 200 009
- EP-A- 0 518 555
- DE-A- 3 836 830
- GB-A- 671 806
- GB-A- 695 070
- GB-A- 738 589
- US-A- 2 757 094
- US-A- 4 218 250
- US-A- 5 039 724

## Beschreibung

Die Erfindung betrifft Organopolysiloxane enthaltende, wäßrige Pflegemittel für harte Oberflächen, die im wesentlichen frei von organischen Lösungsmitteln sind.

Pflegemittel für harte Oberflächen, zum Beispiel für Automobilkarosserien, auf Basis von Organopolysiloxanen sind bereits bekannt. Hierzu sei beispielsweise auf den Übersichtsartikel von Ing. P. Preiss in Seifen - Öle - Fette - Wachse - 102.Jg. Nr. 1/1976, Seite 20-2 verwiesen. In DE 34 09 320 A (Hoechst AG, ausgegeben am 19. September 1985) wird eine Autopolitur beschrieben, welche ein Salz eines langkettigen Fettamins enthält. In DE 36 16 575 A (Dow Corning Ltd., ausgegeben am 20. November 1986) bzw. der entsprechenden US 4,743,648 wird ein Poliermittel in Form einer Wasser-in-öl-Emulsion offenbart, welches ein Polydiorganosiloxan-Polyoxyalkylen-Copolymerisat enthält. In US 4,398,953 (Borden Inc., ausgegeben am 16. August 1983) wird als Poliermittel eine öl-in-Wasser-Emulsion beansprucht, die Siliconöl und aminofunktionelle Silicone enthält. Allen genannten Veröffentlichungen gemeinsam ist die Verwendung von organischen Lösungsmitteln.

Die EP-A2 518 555 (Dow Corning, ausgegeben am 16.12.1992) beschreibt ein Reinigungsmittel für harte Oberflächen, z.B. für Bäder, Fliesen und ähnliches, die mindestens ein oberflächenaktives Mittel, ein Abrasivmittel, Wasser und eine Organosiloxan-Verbindung enthält.

Die GB-A-738 589 beschreibt Siloxanmassen, die Si-O-C oder Si-OCO-C-Bindungen aufweisen, die durch Wasser leicht hydrolysiert werden können.

Maßnahmen zum Umweltschutz zwingen jedoch in zunehmendem Maße zur Vermeidung organischer Lösungsmittel in chemischen Zubereitungen. Außerdem sind organische Lösungsmittel oft mals aufgrund ihrer toxikologischen Eigenschaften und ihrer Brandgefahr unerwünscht.

Es bestand daher die Aufgabe, Pflegemittel auf Basis von Organopolysiloxanen bereitzustellen, die im wesentlichen frei von organischen Lösungsmitteln sind.

Gegenstand der vorliegenden Erfindung sind Pflegemittel für harte Oberflächen, nach den Ansprüchen für die Vertagsstaaten DE, FR, GB, IT und den Ansprüchen für die Vertagsstaaten AT, BE, CH, ES, LI, NL.

Die erfindungsgemäßen Pflegemittel enthalten vorzugsweise kein organisches Lösungsmittel. Sie können jedoch auch geringe Mengen, wie beispielsweise bis zu maximal 2 Gewichtsprozent, bezogen auf das Gesamtgewicht des Pflegemittels, organisches Lösungsmittel, wie etwa in der Funktion eines Konservierungsmittels, enthalten.

Als Raumtemperatur soll im Folgenden eine Temperatur von 20°C verstanden werden.

Bei den erfindungsgemäß eingesetzten, bei Raumtemperatur festen Organopolysiloxanen handelt es sich vorzugsweise um solche, ausgewählt aus der Gruppe bestehend aus
bei Raumtemperatur festen Organopolysiloxanen aus Einheiten der Formel

Rₐ(R¹O)_{b}SiO_{(4-a-b)/2} (I),

wobei
- R: gleich oder verschieden sein kann und einwertige Kohlenwasserstoffreste bedeutet,
- R¹: gleich oder verschieden sein kann, Wasserstoffatom oder einen Kohlenwasserstoffrest bedeutet,
- a: 0, 1, 2 oder 3, durchschnittlich 0,75 bis 1,5, durchschnittlich vorzugsweise 0,9 bis 1,1, und
- b: 0, 1, 2 oder 3, durchschnittlich 0,0 bis 1,1, durchschnittlich vorzugsweise 0,01 bis 0,07, ist,
mit der Maßgabe, daß die Summe aus a + b kleiner oder gleich 3 ist,
bei Raumtemperatur festen, linearen Organopolysiloxanen der Formel

R² ₃SiO(SiR² ₂O)ᵣSiR² ₃ (II),

wobei
- R²: gleich oder verschieden sein kann und einwertige Kohlenwasserstoffreste bedeutet und
- r: eine ganze Zahl im Wert von 0 bis 100, bevorzugt 0 bis 70, ist,
mit der Maßgabe, daß mindestens ein Rest R² in Formel (II) die Bedeutung von Kohlenwasserstoffrest mit mindestens 18 Kohlenstoffatomen hat,
und
cyclischen Organopolysiloxanen der Formel

(R³ ₂SiO)₃ (III),

wobei R³ gleich oder verschieden sein kann und Kohlenwasserstoffrest bedeutet.

Bei Rest R handelt es sich vorzugsweise um Kohlenwasserstoffreste mit 1 bis 18 Kohlenstoffatom(en), wobei der Methylrest besonders bevorzugt ist.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Bei Rest R¹ handelt es sich bevorzugt um Wasserstoffatom und Kohlenwasserstoffreste mit 1 bis 4 Kohlenstoffatom(en), wobei der Methylrest besonders bevorzugt ist.

Beispiele für Kohlenwasserstoffreste R¹ sind die für R angegebenen Beispiele für Kohlenwasserstoffreste mit 1 bis 4 Kohlenstoffatom(en).

Die Herstellung der erfindungsgemäß eingesetzten, bei Raumtemperatur festen Organopolysiloxane ist bekannt und z.B. in GB 6 85 173 A (ausgegeben am 31. Dezember 1951, Dow Corning Ltd.), US 2,842,521 (ausgegeben am 8. Juli 1958, Wacker-Chemie GmbH), FR 14 75 709 A (ausgegeben am 7. April 1967, General Electric Company), US 3,668,180 (ausgegeben am 6. Juni 1972, Stauffer-Wacker-Silicone Corporation), US 3,792,071 (ausgegeben am 12. Februar 1974, Wacker-Chemie GmbH), US 3,846,358 (ausgegeben am 5. November 1974, General Electric Company), und US 4,298,753 (ausgegeben 3. November 1981, Wacker-Chemie GmbH) beschrieben.

Bevorzugt handelt es sich bei den bei Raumtemperatur festen Organopolysiloxanen aus Einheiten der Formel (I) um Organopolysiloxane aus (RSiO_{3/2})-Einheiten und Organopolysiloxane aus (R₃SiO_{1/2})- und (SiO_{4/2})-Einheiten mit R gleich der obengenannten Bedeutung.

Bei dem Rest R² handelt es sich bevorzugt um Kohlenwasserstoffreste mit 1 bis 20 Kohlenstoffatom-(en).

Beispiele für Reste R² sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest, n-Eicosylrest, Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Besonders bevorzugt handelt es sich bei R² um den Methylrest und den n-Octadecylrest.

Obwohl in Formel (II) nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie R²₃SiO_{1/2}-,R²SiO_{3/2}- und SiO_{4/2}-Einheiten, ersetzt sein, wobei R² die vorstehend dafür angegebene Bedeutung hat.

Bei vorzugsweise 10 bis 50 Prozent, besonders bevorzugt 25 bis 50 Prozent, insbesondere 35 bis 50 Prozent, der Anzahl der Reste R² im Organopolysiloxan der Formel (II) handelt es sich um Kohlenwasserstoffreste mit mindestens 18 Kohlenstoffatomen. Wegen der leichteren Zugänglichkeit handelt es sich bei den übrigen Resten bevorzugt um Methylreste.

Beispiele für die erfindungsgemäß eingesetzten, bei Raumtemperatur festen Organopolysiloxane der Formel (II) sind n-C₁₈H₃₇(CH₃)₂SiO[(CH₃)₂SiO]ₘSi(CH₃)₂n-C₁₈H₃₇, wobei m gleich 0 oder eine Zahl von 1 bis 8 ist, und
(CH₃)₃SiO-[CH₃Si(n-C₁₈H₃₇)O]ₒ[(CH₃)₂SiO]ₚ-Si(CH₃)₃, wobei o eine Zahl zwischen 1 und 65 und p eine Zahl zwischen 1 und 60 ist, mit der Maßgabe, daß o größer oder gleich p ist.

Bevorzugt handelt es sich bei den erfindungsgemäß eingesetzten, bei Raumtemperatur festen Organopolysiloxanen der Formel (II) um (CH₃)₃SiO-[CH₃Si(n-C₁₈H₃₇)O]ₒ-Si(CH₃)₃, wobei o eine Zahl zwischen 55 bis 65 ist.

Die erfindungsgemäß eingesetzten, bei Raumtemperatur festen Organopolysiloxane der Formel (II) haben ein Molekulargewicht von vorzugsweise mindestens 1 000, besonders bevorzugt von 10 000 bis 20 000.

Die erfindungsgemäß eingesetzten, bei Raumtemperatur festen Organopolysiloxane der Formel (II) haben vorzugsweise eine wachsartige Konsistenz und einen Schmelzpunkt zwischen 30 und 60°C.

Bei Raumtemperatur feste Organopolysiloxane der Formel (II) und Verfahren zu deren Herstellung sind bereits bekannt.

Bei Rest R³ handelt es sich vorzugsweise um Kohlenwasserstoffreste mit 1 bis 4 Kohlenstoffatom(en), wobei der Methylrest besonders bevorzugt ist.

Beispiele für Rest R³ sind die für R angegebenen Beispiele für Kohlenwasserstoffreste mit 1 bis 4 Kohlenstoffatom(en).

Bei den Organopolysiloxanen der Formel (III) handelt es sich besonders bevorzugt um Hexamethylcyclotrisiloxan.

Die erfindungsgemäßen Pflegemittel werden besonders bevorzugt unter Verwendung von bei Raumtemperatur festen Organopolysiloxanen aus Einheiten der Formel (I) oder bei Raumtemperatur festen Organopolysiloxanen der Formel (II) oder deren Gemischen hergestellt.

Zur Herstellung der erfindungsgemäßen Pflegemittel wird bei Raumtemperatur festes Organopolysiloxan in Mengen von vorzugsweise 0,1 bis 5,0 Gewichtsprozent, besonders bevorzugt von 0,5 bis 2,0 Gewichtsprozent, jeweils bezogen auf das Gesamtgewicht an dem erfindungsgemäßen Pflegemittel, eingesetzt.

Vorzugsweise werden zur Herstellung der erfindungsgemäßen Pflegemittel die bei Raumtemperatur festen Organopolysiloxane in Form einer wäßrigen Emulsion eingesetzt. Wäßrige Emulsionen von bei Raumtemperatur festen Organopolysiloxanen sind bereits bekannt. Hierzu sei beispielsweise auf CA-A 12 05 937 (ausgegeben 10. Juni 1986, F. Traver, General Electric Co.) und DE 3836830 A (Wacker-Chemie GmbH; ausgegeben am 17. Mai 1990) bzw. der entsprechenden US-Anmeldung mit der Seriennummer USSN 425094 verwiesen.

Falls zur Herstellung der erfindungsgemäßen Pflegemittel bei Raumtemperatur festes Organopolysiloxan aus Einheiten der Formel (I) eingesetzt wird, wird die Emulsion vorzugsweise nach der in der oben zitierten Veröffentlichung DE 3836830 A beschriebenen Verfahrensweise zubereitet. Demnach wird das bei Raumtemperatur feste Organopolysiloxan aus Einheiten der Formel (I) in einem bei Raumtemperatur flüssigen, niedermolekularen Organopolysiloxan gelöst und diese Lösung mit Wasser unter Zusatz eines Emulgators sowie gegebenenfalls weiteren Stoffen emulgiert. Das Lösen des bei Raumtemperatur festen Organopolysiloxans in dem bei Raumtemperatur flüssigen Organopolysiloxan sowie der Emulgierschritt kann in üblichen, zur Herstellung von Emulsionen geeigneten Mischgeräten erfolgen.

Als bei Raumtemperatur flüssiges, niedermolekulares Organopolysiloxan wird vorzugsweise solches aus Einheiten der allgemeinen Formel

R⁴ _{c}(R⁵O)_{d}SiO_{(4-c-d)/2} (IV)

eingesetzt, wobei
- R⁴: gleich oder verschieden sein kann und eine für R angegebene Bedeutung hat,
- R⁵: gleich oder verschieden sein kann und eine für R¹ angegebene Bedeutung hat,
- c: 0, 1, 2 oder 3, durchschnittlich 0 bis 2, durchschnittlich vorzugsweise 1 bis 2, und
- d: 0, 1, 2 oder 3, durchschnittlich 0 bis 2, durchschnittlich vorzugsweise 0 bis 1, ist,
mit der Maßgabe, daß die Summe aus c + d kleiner oder gleich 3 ist.

Diese bei Raumtemperatur flüssigen, niedermolekularen Organopolysiloxane aus Einheiten der Formel (IV) haben vorzugsweise 2 bis 6 Si-Atome pro Molekül und bei 25°C eine Viskosität vorzugsweise von 0,65 bis 7,00 mm²/s, besonders bevorzugt von 2,00 bis 4,00 mm²/s.

Beispiele für bei Raumtemperatur flüssige, niedermolekulare Organopolysiloxane sind Octamethylcyclotetrasiloxan, Decamethylcyclopentasiloxan, Octaphenylcyclotetrasiloxan, Tetraethoxytetramethylcyclotetrasiloxan sowie Hexamethyldisiloxan, wobei Octamethylcyclotetrasiloxan, Decamethylcyclopentasiloxan und Hexamethyldisiloxan bevorzugt und Octamethylcyclotetrasiloxan sowie Hexamethyldisiloxan besonders bevorzugt eingesetzt werden.

Zur Herstellung der erfindungsgemäß eingesetzten, wäßrigen Emulsion von bei Raumtemperatur festen Organopolysiloxanen wird bei Raumtemperatur flüssiges, niedermolekulares Organopolysiloxan vorzugsweise in Mengen von 25 bis 90 Gew.-%, insbesondere 35 bis 65 Gew.-%, besonders bevorzugt 40 bis 60 Gew.-%, jeweils bezogen auf das Gesamtgewicht an bei Raumtemperatur festem Organopolysiloxan aus Einheiten der Formel (I), eingesetzt.

Bei der Herstellung der erfindungsgemäß eingesetzten, wäßrigen Emulsionen von bei Raumtemperatur festen Organopolysiloxanen können als Emulgatoren alle bisher bekannten, ionischen und nicht-ionischen Emulgatoren sowohl einzeln, als auch in Mischungen verschiedener Emulgatoren eingesetzt werden, mit denen auch bisher beständige wäßrige Emulsionen von Organopolysiloxanen hergestellt werden konnten. Es können auch solche Emulgiermittel, wie sie in DE 36 13 384 C bzw. in der entsprechenden US-Anmeldung mit der Seriennummer USSN 19 988 beschrieben sind, eingesetzt werden. Vorzugsweise werden nicht-ionische und kationaktive Emulgatoren eingesetzt. Besonders bevorzugt werden dabei Fettalkoholpolyglycolether, Nonylphenolpolyglycolether, Tri-n-butylphenolpolyglycolether und quarternäre Ammoniumsalze von gesättigten und ungesättigten Fettsäuren eingesetzt.

Die erfindungsgemäß eingesetzten, wäßrigen Emulsionen von bei Raumtemperatur festen Organopolysiloxanen aus Einheiten der Formel (I) enthalten Emulgator in Mengen von vorzugsweise 2 bis 8 Gew.-%, besonders bevorzugt 3 bis 5 Gew.-%, jeweils bezogen auf das Gesamtgewicht an eingesetztem, bei Raumtemperatur festem Organopolysiloxan und bei Raumtemperatur flüssigem Organopolysiloxan.

Die erfindungsgemäß eingesetzten, wäßrigen Emulsionen von bei Raumtemperatur festen Organopolysiloxanen aus Einheiten der Formel (I) besitzen einen Festgehalt von vorzugsweise 10 bis 50 Gew.-%, insbesondere 15 bis 42 Gew.-%, jeweils bezogen auf das Gesamtgewicht der Emulsion.

Falls zur Herstellung der erfindungsgemäßen Pflegemittel bei Raumtemperatur festes Organopolysiloxan der Formel (II) eingesetzt wird, erfolgt die Herstellung der Emulsion vorteilhafterweise dadurch, daß bei Raumtemperatur festes Organopolysiloxan der Formel (II) geschmolzen wird und in flüssiger Form mit Wasser und Emulgator sowie gegebenenfalls weiteren Stoffen emulgiert wird.

Die zum Schmelzen notwendige Temperatur hängt von dem eingesetzten Organopolysiloxan der Formel (II) ab und liegt vorzugsweise zwischen 20 und 60°C, besonders bevorzugt zwischen 40 und 50°C.

Das Emulgieren der Schmelze wird nach in der Silicium-Chemie üblichen Verfahren durchgeführt. Als Emulgatoren können dabei die oben bereits beschriebenen Emulgatoren eingesetzt werden, wobei Fettalkoholpolyglycolether und Nonylphenolpolyglycolether bevorzugt und Fettalkoholpolyglycolether besonders bevorzugt ist.

Die erfindungsgemäß eingesetzten, wäßrigen Emulsionen von bei Raumtemperatur festen Organopolysiloxanen der Formel (II) enthalten Emulgator in Mengen von vorzugsweise 3 bis 10 Gew.-%, besonders bevorzugt 4 bis 6 Gew.-%, jeweils bezogen auf das Gesamtgewicht an eingesetztem, bei Raumtemperatur festem Organopolysiloxan.

Die erfindungsgemäß eingesetzten, wäßrigen Emulsionen von bei Raumtemperatur festen Organopolysiloxanen der Formel (II) besitzen einen Festgehalt von vorzugsweise 25 bis 50 Gew.-%, insbesondere 30 bis 45 Gew.-%, jeweils bezogen auf das Gesamtgewicht der Emulsion.

Emulsionen aus bei Raumtemperatur festen Organopolysiloxanen der Formel (II) können jedoch auch selbstverständlich auf die oben für Organopolysiloxane aus Einheiten der Formel (I) beschriebene Verfahrensweise gemäß DE 3836830 A hergestellt werden, was aber nicht bevorzugt ist.

Falls zur Herstellung der erfindungsgemäßen Pflegemittel bei Raumtemperatur festes Organopolysiloxan der Formel (III) eingesetzt wird, erfolgt die Herstellung der Emulsion vorzugsweise analog zu der für Organopolysiloxan der Formel (II) beschriebenen Verfahrensweise.

Des weiteren können zur Herstellung des erfindungsgemäßen Pflegemittels bei Raumtemperatur flüssige Organopolysiloxane eingesetzt werden. Es kann sich dabei um niedermolekulare Organopolysiloxane aus Einheiten der Formel (IV) handeln, die zur Herstellung der Emulsionen von bei Raumtemperatur festen Organopolysiloxanen eingesetzt werden, wobei solche mit einer Viskosität bei 25°C von 0,65 bis 7,00 mm²/s bevorzugt und solche mit einer Viskosität von 2,00 bis 4,00 mm²/s besonders bevorzugt sind.

Die bei Raumtemperatur flüssigen Organopolysiloxane werden vorzugsweise in Form einer wäßrigen Emulsion eingesetzt. Dabei können diese nach der in der Silicium-Chemie üblichen Verfahren einzeln emulgiert werden. Die Emulsionen von bei Raumtemperatur flüssigen Organopolysiloxanen haben dabei vorzugsweise einen Feststoffgehalt von 10 bis 60 Gewichtsprozent, besonders bevorzugt von 30 bis 45 Gewichtsprozent, und einen Emulgatoranteil von vorzugsweise 2 bis 10 Gewichtsprozent, besonders bevorzugt von 3 bis 6 Gewichtsprozent, jeweils bezogen auf das Gesamtgewicht der Emulsion.

Die bei Raumtemperatur flüssigen Organopolysiloxane können jedoch auch zusammen mit den erfindungsgemäß eingesetzten, bei Raumtemperatur festen Organopolysiloxanen nach der oben beschriebenen Arbeitsweise emulgiert werden.

Falls zur Herstellung der erfindungsgemäßen Pflegemittel zusätzlich bei Raumtemperatur flüssiges Organopolysiloxan eingesetzt wird, wird es vorzugsweise in Mengen von 0,1 bis 2,0 Gewichtsprozent, besonders bevorzugt 0,1 bis 1 Gewichtsprozent, jeweils bezogen auf das Gesamtgewicht des Pflegemittels, eingesetzt.

Das erfindungsgemäße Pflegemittel kann je nach Einsatzzweck Zusatzstoffe, wie beispielsweise nicht siliciumhaltige Wachse, Verdickungsmittel, Schleifmittel, Konservierungsmittel und Additive, enthalten.

Beispiele für nicht siliciumhaltige Wachse sind natürliche Wachse pflanzlichen Ursprungs, wie Carnaubawachs und Candelillawachs, Montansäure- und Montanesterwachse, anoxidierte synthetische Paraffine, Polyethylenwachse, Polyvinyletherwachse und metallseifenhaltiges Wachs, wobei Carnaubawachs, Paraffinwachse und Polyethylenwachse bevorzugt und Paraffinwachse besonders bevorzugt sind.

Falls zur Herstellung des erfindungsgemäßen Pflegemittels Wachse eingesetzt werden, werden sie vorzugsweise in Mengen von 0,1 bis 2,0 Gewichtsprozent, besonders bevorzugt 0,1 bis 1,0 Gewichtsprozent, jeweils bezogen auf das Gesamtgewicht des Pflegemittels, eingesetzt.

Beispiele für Verdickungsmittel sind Homopolysaccharide, Heteropolysaccharide, Polyacrylate, Carboxy- und Hydroxymethylcellulose, wobei Polysaccharide und Polyacrylate bevorzugt und Polysaccharide besonders bevorzugt sind.

Falls zur Herstellung des erfindungsgemäßen Pflegemittels Verdickungsmittel eingesetzt werden, werden sie vorzugsweise in Mengen von 0,1 bis 1,5 Gewichtsprozent, besonders bevorzugt 0,3 bis 0,6 Gewichtsprozent, jeweils bezogen auf das Gesamtgewicht des Pflegemittels, eingesetzt.

Beispiele für Schleifmittel sind Poliertonerde, sog. Kieselkreide, pyrogene Kieselsäure und natürliche Kieselgur, wie beispielsweise "Snow Floss" der Fa. Lehmann & Foss, wobei Kieselkreide und Poliertonerde besonders bevorzugt sind.

Falls zur Herstellung des erfindungsgemäßen Pflegemittels Schleifmittel eingesetzt werden, werden sie vorzugsweise in Mengen von 1 bis 10 Gewichtsprozent, besonders bevorzugt 3 bis 5 Gewichtsprozent, jeweils bezogen auf das Gesamtgewicht des Pflegemittels, eingesetzt.

Beispiele für Konservierungsmittel sind Formaldehyd, Parabene, Benzylalkohol, Salicylsäure und deren Salze, Benzoesäure und deren Salze sowie Isothiazolinone, wobei Formaldehyd und Isothiazolinone bevorzugt und Formaldehyd besonders bevorzugt sind.

Falls zur Herstellung des erfindungsgemäßen Pflegemittels Konservierungsmittel eingesetzt werden, werden sie vorzugsweise in Mengen von 0,01 bis 0,30 Gewichtsprozent, besonders bevorzugt 0,05 bis 0,10 Gewichtsprozent, jeweils bezogen auf das Gesamtgewicht des Pflegemittels, eingesetzt.

Beispiele für Additive sind Duftstoffe und Farbstoffe.

Falls zur Herstellung des erfindungsgemäßen Pflegemittels Additive eingesetzt werden, werden sie vorzugsweise in Mengen von 0,01 bis 0,20 Gewichtsprozent, besonders bevorzugt 0,05 bis 0,10 Gewichtsprozent, jeweils bezogen auf das Gesamtgewicht des Pflegemittels, eingesetzt.

Von jeder der vorstehend als mögliche Komponente für die erfindungsgemäßen wäßrigen Pflegemittel genannten Gruppen von Stoffen kann jeweils als eine Komponente ein Stoff dieser Gruppe oder auch ein Gemisch aus mindestens zwei verschiedenen dieser Stoffe verwendet werden.

Die erfindungsgemäßen Pflegemittel enthalten Wasser vorzugsweise in Mengen von 85 bis 99,9 Gewichtsprozent, besonders bevorzugt 93 bis 99,5 Gewichtsprozent, jeweils bezogen auf das Gesamtgewicht des Pflegemittels, wobei es sich vorzugsweise um entmineralisiertes Wasser handelt.

Die einzelnen Komponenten des erfindungsgemäßen Pflegemittels können auf beliebige Art und Weise miteinander vermischt werden. So können zum Beispiel die Zusatzstoffe dem bei Raumtemperatur festen Organopolysiloxan vor dem Emulgierschritt zugemischt werden. Die Zusatzstoffe können jedoch auch mit den fertigen Emulsionen von bei Raumtemperatur festen Organopolysiloxanen und gegebenenfalls von bei Raumtempertaur flüssigen Organopolysiloxanen vermischt werden, was bevorzugt ist.

Das Emulgieren bzw. das Vermischen der zur Herstellung der erfindungsgemäßen Pflegemittel einsetzbaren Komponenten wird vorzugsweise bei einer Temperatur von 20 bis 50°C und einem Druck der umgebenden Atmosphäre, also zwischen 900 und 1100 hPa, durchgeführt. Es können aber auch höhere oder niedrigere Temperaturen sowie höhere oder niedrigere Drucke angewendet werden. Der Emulgierschritt kann in üblichen, zur Herstellung von Emulsionen geeigneten Mischgeräten, wie schnellaufenden Stator-Rotor-Rührgeräten nach Prof. P. Willems, wie sie unter dem registrierten Warenzeichen "Ultra-Turrax" bekannt sind, erfolgen.

Die erfindungsgemäßen Poliermittel haben bei Raumtemperatur eine Konsistenz von dünnflüssig bis cremig pastös.

Die erfindungsgemäßen Poliermittel haben eine gute Emulsionsstabilität von mindestens zwei Jahren bei einer sachgemäßen Lagerung bei Raumtemperatur.

Bei dem erfindungsgemäßen Verfahren wird das erfindungsgemäße Pflegemittel durch Sprühen, Tauchen oder mit einem Hilfsmittel, wie Watte, Textilien und Schwamm, aufgetragen und verrieben. Das erfindungsgemäße Pflegemittel hat den Vorteil, daß es sich leicht auftragen und gut verreiben läßt.

Bei den zu behandelnden harten Oberflächen handelt es sich insbesondere um metallische Oberflächen, lackierte Oberflächen und Kunststoffoberflächen. Ausgezeichnet eignet sich das erfindungsgemäße Pflegemittel zur Behandlung von Automobilkarosserien.

Die erfindungsgemäßen Pflegemittel haben den Vorteil, daß sie kein organisches Lösungsmittel bzw. organisches Lösungsmittel nur in äußerst geringen Mengen, zum Beispiel als Konservierer enthalten.

Des weiteren haben sie den Vorteil, daß mit den erfindungsgemäßen Pflegemitteln eine ausgezeichnete Witterungs- und Waschbeständigkeit erzielt wird. Um diesen Effekt zu erreichen, genügen bereits niedrige Einsatzmengen an bei Raumtemperatur festen Organopolysiloxanen zur Herstellung der erfindungsgemäßen Pflegemittel.

Darüber hinaus haben die erfindungsgemäßen Pflegemittel den Vorteil, daß sie nicht entflammbar sind, leicht anwendbar sind und den behandelten festen Oberflächen hohe Farbtiefe und Glanz verleihen.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Die Randwinkelmessungen werden wie folgt durchgeführt: Auf die zu testende Oberfläche wird aus einer Höhe von 15 mm ein Wassertropfen mit einem Volumen von 0,01 ml aufgebracht und mit Hilfe eines Goniometers (Typ 100-10 der Fa. Rame-Hart Inc., New Jersey, USA) der Randwinkel bestimmt. Die Messung wird 4mal wiederholt und aus den 5 Messungen der Mittelwert gebildet. Als Blindwert wird im Folgenden die Randwinkelmessung auf dem nicht mit dem erfindungsgemäßen Pflegemittel behandelten Substrat bezeichnet.

Es werden die folgenden Abkürzungen verwendet:
Me: Methylrest
Et: Ethylrest.

### Beispiel 1

**A**
   50 Teile eines bei Raumtemperatur festen Organopolysiloxans der Formel MeSiO_{1,47}(OEt)_{0,06} mit einem Molekulargewicht von 4000 werden in 50 Teilen Octamethylcyclotetrasiloxan gelöst. Die resultierende Mischung besitzt eine Viskosität von ca. 150 mm²/s.
   Zu 175 g dieser Organopolysiloxanlösung werden 20 g eines Fettalkoholpolyglykolether-Emulgators (käuflich erhältlich unter der Bezeichnung "Arkopal" bei der Hoechst AG) gegeben und verrührt. Diese Mischung wird dann mit Hilfe eines Emulgiergeräts emulgiert, indem unter ständigem Rühren 305 g entionisiertes Wasser zugegeben werden. Es wird eine wäßrige Emulsion von bei Raumtemperatur festem Organopolysiloxan mit einem Festgehalt von 20 Gewichtsprozent, bezogen auf das Gesamtgewicht an Emulsion, erhalten.
**B**
   Zu 175 g Organopolysiloxan der Formel

   Me₃SiO[MeSi(n-C₁₈H₃₇)O]₆₀SiMe₃

   werden 25 g eines Fettalkoholpolyglykolether-Emulgators (käuflich erhältlich unter der Bezeichnung "Genapol" bei der Hoechst AG) gegeben und verrührt. Diese Mischung wird dann mit Hilfe eines Emulgiergeräts emulgiert, indem unter ständigem Rühren 300 g entionisiertes Wasser zugegeben werden. Es wird eine wäßrige Emulsion von bei Raumtemperatur festem Organopolysiloxan mit einem Festgehalt von 38 Gewichtsprozent, bezogen auf das Gesamtgewicht an Emulsion, erhalten.
**C**
   Zu 175 g mit Trimethylsiloxy-Einheiten terminiertem Dimethylpolysiloxan mit einer Viskosität von 350 mm²/s (käuflich erhältlich unter der Bezeichnung "AK 350" bei der Wacker-Chemie GmbH, München) werden 15 g eines Fettalkoholpolyglykolether-Emulgators (käuflich erhältlich unter der Bezeichnung "Genapol" bei der Hoechst AG) gegeben und verrührt. Diese Mischung wird dann mit Hilfe eines Emulgiergeräts emulgiert, indem unter ständigem Rühren 310 g entionisiertes Wasser zugegeben werden. Es wird eine wäßrige Emulsion von bei Raumtemperatur festem Organopolysiloxan mit einem Festgehalt von 37 Gewichtsprozent, bezogen auf das Gesamtgewicht an Emulsion, erhalten.

1,0 g der oben unter A beschriebenen Emulsion, 2,0 g der oben unter B beschriebenen Emulsion, 2,0 g der oben unter C beschriebenen Emulsion, 94,6 g entmineralisiertes Wasser und 0,1 g Formalin-Lösung (40 %ig) werden miteinander vermischt und unter Rühren mit 0,3 g Heteropolysaccharid (käuflich erhältlich unter der Bezeichnung "Xanthan" bei der Fa. Jungbunzlauer Xanthan GmbH, A-Wien) versetzt.

Das so erhaltene Pflegemittel wird mit Watte auf das Blech einer Kraftfahrzeugkarosserie mit einem Blindwert von 66° aufgetragen und verrieben. Nach 15 Minuten Stehenlassen bei Raumtemperatur wird ein Randwinkel von 99° gemessen. Nun wird das behandelte Substrat ebenfalls bei Raumtemperatur 4mal 15 Minuten mit jeweils 10 l pro 100 cm² Substrat Leitungswasser einer Temperatur von ca. 6°C aus einem Abstand von 20 cm beregnet. Das Ergebnis der Randwinkelmessungen findet sich in Tabelle 1.

**Tabelle 1**

| Dauer der Beregnung [min] | Randwinkel |
|---|---|
| 15 | 95° |
| 30 | 95° |
| 45 | 95° |
| 60 | 91° |

### Beispiel 2

3,0 g der in Beispiel 1 unter A beschriebenen Emulsion, 6,0 g einer Emulsion von Montanwachs in Wasser (käuflich erhältlich unter der Bezeichnung "KSE" bei der Hoechst AG; Festgehalt: 12 %), 91,9 g entmineralisiertes Wasser und 0,1 g Isothiazolinon werden miteinander vermischt.

Das so erhaltene Pflegemittel wird mit einem Tuch auf ein lackiertes Blech einer Kraftfahrzeugkarosserie mit einem Blindwert von 67° aufgetragen und verrieben.

Nach 15 Minuten Stehenlassen bei Raumtemperatur wird ein Randwinkel von 94° gemessen. Nun wird das behandelte Substrat ebenfalls bei Raumtemperatur 4mal 15 Minuten mit jeweils 10 l pro 100 cm² Substrat Leitungswasser einer Temperatur von ca. 6°C aus einem Abstand von 20 cm beregnet. Das Ergebnis der Randwinkelmessungen findet sich in Tabelle 2.

**Tabelle 2**

| Dauer der Beregnung [min] | Randwinkel |
|---|---|
| 15 | 93° |
| 30 | 89° |
| 45 | 87° |
| 60 | 85° |

### Beispiel 3

1,0 g der in Beispiel 1 unter A beschriebenen Emulsion, 2,0 g der in Beispiel 1 unter B beschriebenen Emulsion, 1,0 g der in Beispiel 1 unter C beschriebenen Emulsion, 6,0 g einer Emulsion von Montanwachs in Wasser (käuflich erhältlich unter der Bezeichnung "KSE" bei der Hoechst AG; Festgehalt: 12 %), 86,5 g entmineralisiertes Wasser, 3 g Neuburger Kieselerde (käuflich erhältlich unter der Bezeichnung "Silitin" der Fa. Hoffmann Mineral, Neuburg/D.) und 0,5 g Heteropolysaccharid (käuflich erhältlich unter der Bezeichnung "Xanthan" bei der Fa. Jungbunzlauer Xanthan GmbH, A-Wien) werden miteinander vermischt. Es wird ein dickflüssiges Pflegemittel erhalten.

Das so erhaltene Pflegemittel wird mit einem Tuch auf ein lackiertes Blech einer Kraftfahrzeugkarosserie mit einem Blindwert von 66° aufgetragen und verrieben.

Nach 15 Minuten Stehenlassen bei Raumtemperatur wird ein Randwinkel von 91° gemessen. Nun wird das behandelte Substrat ebenfalls bei Raumtemperatur 4mal 15 Minuten mit je 10 l/100cm² Substrat Leitungswasser einer Temperatur von ca. 6°C aus einem Abstand von 20 cm beregnet. Das Ergebnis der Randwinkelmessungen findet sich in Tabelle 3.

**Tabelle 3**

| Dauer der Beregnung [min] | Randwinkel |
|---|---|
| 15 | 82° |
| 30 | 81° |
| 45 | 80° |
| 60 | 79° |

## Patentansprüche (Patentansprüche für folgende(n) Vertragsstaat(en): DE, FR, GB, IT)

1. Pflegemittel für harte Oberflächen, welche im wesentlichen kein organisches Lösungsmittel enthalten, herstellbar unter Verwendung von bei Raumtemperatur festen Organopolysiloxanen, dadurch gekennzeichnet, daß es sich bei den bei Raumtemperatur festen Organopolysiloxanen um
bei Raumtemperatur feste, lineare Organopolysiloxane der Formel
R² ₃SiO(SiR² ₂O)ᵣSiR² ₃ (II)
handelt, wobei
R² gleich oder verschieden sein kann und einwertige Kohlenwasserstoffreste bedeutet und
r eine ganze Zahl im Wert von 0 bis 100 ist,
mit der Maßgabe, daß mindestens ein Rest R² in Formel (II) die Bedeutung von Kohlenwasserstoffrest mit mindestens 18 Kohlenstoffatomen hat, wobei es sich bei 10 - 50 % der Anzahl der Reste R² um Kohlenwasserstoffreste mit mindestens 18 Kohlenstoffatomen handelt, mit der Maßgabe, daß Verbindungen der Formeln (CH₃)₃SiO((CH₃)₂SiO)₃[(CH₃SiO(CH₂)₁₇CH₃)]₅Si(CH₃)₃ und (CH₃)₃SiO((CH₃)₂SiO)₃[(CH₃SiO(CH₂)₁₉CH₃)]₅Si(CH₃)₃ ausgenommen sind.

2. Pflegemittel nach Anspruch 1, dadurch gekennzeichnet, daß zur Herstellung des Pflegemittels bei Raumtemperatur festes Organopolysiloxan in Mengen von 0,1 bis 5,0 Gewichtsprozent, bezogen auf das Gesamtgewicht des Pflegemittels, eingesetzt wird.

3. Pflegemittel nach einem oder mehreren der Ansprüche 1 bis 2, dadurch gekennzeichnet, daß das bei Raumtemperatur feste Organopolysiloxan in Form einer wäßrigen Emulsion verwendet wird.

4. Pflegemittel nach einem oder mehreren der Ansprüche 1 bis 3, dadurch gekennzeichnet, daß zur Herstellung des Pflegemittels bei Raumtemperatur flüssiges Organopolysiloxan verwendet wird.

5. Pflegemittel nach einem oder mehreren der Ansprüche 1 bis 4, dadurch gekennzeichnet, daß zur Herstellung des Pflegemittels Zusatzstoffe, ausgewählt aus der Gruppe bestehend aus nicht siliciumhaltigen Wachsen, Verdickungsmitteln, Schleifmitteln, Konservierungsmitteln und Additiven, wie Duftstoffe und Farbstoffe, verwendet werden.

6. Pflegemittel nach einem oder mehreren der Ansprüche 1 bis 5, dadurch gekennzeichnet, daß sie Wasser in Mengen von 85 bis 99,9 Gewichtsprozent, bezogen auf das Gesamtgewicht des Pflegemittels, enthalten.

7. Pflegemittel nach einem oder mehreren der Ansprüche 1 bis 6, dadurch gekennzeichnet, daß sie kein organisches Lösungsmittel enthalten.

8. Verfahren zur pflegenden Behandlung von harten Oberflächen, dadurch gekennzeichnet, daß Pflegemittel gemäß einem oder mehreren der Ansprüche 1 bis 7 auf die harte Oberfläche aufgebracht wird.

9. Verfahren nach Anspruch 8, dadurch gekennzeichnet, daß es sich bei den harten Oberflächen um solche, ausgewählt aus der Gruppe bestehend aus metallischen Oberflächen, lackierten Oberflächen und Kunststoffoberflächen handelt.

10. Verwendung eines wäßrigen Mittels als Pflegemittel für harte Oberflächen, welches im wesentlichen kein organisches Lösungsmittel enthält, das herstellbar unter Verwendung von bei Raumtemperatur festen Organopolysiloxanen ist, dadurch gekennzeichnet, daß es sich bei den bei Raumtemperatur festen Organopolysiloxanen um solche
aus Einheiten der Formel
Rₐ(R¹O)_{b}SiO_{(4-a-b)/2} (I)
handelt, wobei
R gleich oder verschieden sein kann und einwertige Kohlenwasserstoffreste bedeutet,
R¹ gleich oder verschieden sein kann, Wasserstoffatom oder einen Kohlenwasserstoffrest bedeutet,
a 0, 1, 2 oder 3, durchschnittlich 0,75 bis 1,5, und
b 0, 1, 2 oder 3, durchschnittlich 0,0 bis 1,1, ist,
mit der Maßgabe, daß die Summe aus a+b kleiner oder gleich 3 ist.

## Patentansprüche (Patentansprüche für folgende(n) Vertragsstaat(en): AT, BE, CH, ES, LI, NL)

1. Pflegemittel für harte Oberflächen, welche im wesentlichen kein organisches Lösungsmittel enthalten, herstellbar unter Verwendung von bei Raumtemperatur festen Organopolysiloxanen, dadurch gekennzeichnet, daß es sich bei den bei Raumtemperatur festen Organopolysiloxanen um solche, ausgewählt aus der Gruppe bestehend aus
bei Raumtemperatur festen, linearen Organopolysiloxanen der Formel
R² ₃SiO(SiR² ₂O)ᵣSiR² ₃ (II),
wobei
R² gleich oder verschieden sein kann und einwertige Kohlenwasserstoffreste bedeutet und
r eine ganze Zahl im Wert von 0 bis 100 ist,
mit der Maßgabe, daß mindestens ein Rest R² in Formel (II) die Bedeutung von Kohlenwasserstoffrest mit mindestens 18 Kohlenstoffatomen hat,
und
cyclischen Organopolysiloxanen der Formel
(R³ ₂SiO)₃ (III),
wobei R³ gleich oder verschieden sein kann und Kohlenwasserstoffrest bedeutet, handelt.

2. Pflegemittel nach Anspruch 1, dadurch gekennzeichnet, daß zur Herstellung des Pflegemittels bei Raumtemperatur festes Organopolysiloxan in Mengen von 0,1 bis 5,0 Gewichtsprozent, bezogen auf das Gesamtgewicht des Pflegemittels, eingesetzt wird.

3. Pflegemittel nach einem oder mehreren der Ansprüche 1 bis 2, dadurch gekennzeichnet, daß das bei Raumtemperatur feste Organopolysiloxan in Form einer wäßrigen Emulsion verwendet wird.

4. Pflegemittel nach einem oder mehreren der Ansprüche 1 bis 3, dadurch gekennzeichnet, daß zur Herstellung des Pflegemittels bei Raumtemperatur flüssiges Organopolysiloxan verwendet wird.

5. Pflegemittel nach einem oder mehreren der Ansprüche 1 bis 4, dadurch gekennzeichnet, daß zur Herstellung des Pflegemittels Zusatzstoffe, ausgewählt aus der Gruppe bestehend aus nicht siliciumhaltigen Wachsen, Verdickungsmitteln, Schleifmitteln, Konservierungsmitteln und Additiven, wie Duftstoffe und Farbstoffe, verwendet werden.

6. Pflegemittel nach einem oder mehreren der Ansprüche 1 bis 5, dadurch gekennzeichnet, daß sie Wasser in Mengen von 85 bis 99,9 Gewichtsprozent, bezogen auf das Gesamtgewicht des Pflegemittels, enthalten.

7. Pflegemittel nach einem oder mehreren der Ansprüche 1 bis 6, dadurch gekennzeichnet, daß sie kein organisches Lösungsmittel enthalten.

8. Verfahren zur pflegenden Behandlung von harten Oberflächen, dadurch gekennzeichnet, daß Pflegemittel gemäß einem oder mehreren der Ansprüche 1 bis 7 auf die harte Oberfläche aufgebracht wird.

9. Verfahren nach Anspruch 8, dadurch gekennzeichnet, daß es sich bei den harten Oberflächen um solche, ausgewählt aus der Gruppe bestehend aus metallischen Oberflächen, lackierten Oberflächen und Kunststoffoberflächen handelt.

10. Verwendung eines wäßrigen Mittels als Pflegemittel für harte Oberflächen, welches im wesentlichen kein organisches Lösungsmittel enthält, das herstellbar unter Verwendung von bei Raumtemperatur festen Organopolysiloxanen ist, dadurch gekennzeichnet, daß es sich bei den bei Raumtemperatur festen Organopolysiloxanen um solche
aus Einheiten der Formel
Rₐ(R¹O)_{b}SiO_{(4-a-b)/2} (I)
handelt, wobei
R gleich oder verschieden sein kann und einwertige Kohlenwasserstoffreste bedeutet,
R¹ gleich oder verschieden sein kann, Wasserstoffatom oder einen Kohlenwasserstoffrest bedeutet,
a 0, 1, 2 oder 3, durchschnittlich 0,75 bis 1,5, und
b 0, 1, 2 oder 3, durchschnittlich 0,0 bis 1,1, ist,
mit der Maßgabe, daß die Summe aus a+b kleiner oder gleich 3 ist.

## Claims (Claims for the following Contracting State(s): DE, FR, GB, IT)

1. Polishes for hard surfaces essentially containing no organic solvent, preparable using organopolysiloxanes which are solid at room temperature, characterized in that the organopolysiloxanes which are solid at room temperature are linear organopolysiloxanes which are solid at room temperature and have the formula
R² ₃SiO(SiR² ₂O)ᵣSiR² ₃ (II)
in which
each R² can be identical to or different from the others and denotes monovalent hydrocarbon radicals and
r is an integer having a value from 0 to 100,
with the proviso that at least one radical R² in formula (II) denotes a hydrocarbon radical having at least 18 carbon atoms, 10-50% of the number of radicals R² being hydrocarbon radicals with at least 18 carbon atoms, with the proviso that compounds of the formulae (CH₃)₃SiO((CH₃)₂SiO)₃[(CH₃SiO(CH₂)₁₇CH₃)]₅Si(CH₃)₃ and (CH₃)₃SiO((CH₃)₂SiO)₃[CH₃SiO(CH₂)₁₉CH₃)]₅SI(CH₃)₃ are excluded.

2. Polish according to Claim 1, characterized in that, to prepare the polish, organopolysiloxane which is solid at room temperature is used in amounts of 0.1 to 5.0 per cent by weight, relative to the total weight of the polish.

3. Polish according to one or more of Claims 1 to 2, characterized in that the organopolysiloxane which is solid at room temperature is used in the form of an aqueous emulsion.

4. Polish according to one or more of Claims 1 to 3, characterized in that, to prepare the polish, organopolysiloxane which is liquid at room temperature is used.

5. Polish according to one or more of Claims 1 to 4, characterized in that, to prepare the polish, added substances selected from the group consisting of non-silicon-containing waxes, thickeners, abrasives, preservatives and additives, such as scents and dyes, are used.

6. Polishes according to one or more of Claims 1 to 5, characterized in that they contain water in amounts of 85 to 99.9 per cent by weight, relative to the total weight of the polish.

7. Polishes according to one or more of Claims 1 to 6, characterized in that they contain no organic solvent.

8. Process for the polishing treatment of hard surfaces, characterized in that polish according to one or more of Claims 1 to 7 is applied to the hard surface.

9. Process according to Claim 8, characterized in that the hard surfaces are selected from the group consisting of metallic surfaces, coated surfaces and plastic surfaces.

10. Use of an aqueous agent as a polish for hard surfaces essentially containing no organic solvent, preparable using organopolysiloxanes which are solid at room temperature, characterized in that the organopolysiloxanes which are solid at room temperature are those comprising units of the formula
Rₐ(R¹O)_{b}SiO_{(4-a-b)/2} (I)
in which
each R can be identical to or different from the others and denotes monovalent hydrocarbon radicals,
each R¹ can be identical to or different from the others and denotes a hydrogen atom or a hydrocarbon radical,
a is 0, 1, 2 or 3, on average 0.75 to 1.5, and
b is 0, 1, 2 or 3, on average 0.0 to 1.1,
with the proviso that the sum of a+b is smaller than or equal to 3.

## Claims (Claims for the following Contracting State(s): AT, BE, CH, ES, LI, NL)

1. Polishes for hard surfaces essentially containing no organic solvent, preparable using organopolysiloxanes which are solid at room temperature, characterized in that the organopolysiloxanes which are solid at room temperature are those selected from the group consisting of linear organopolysiloxanes which are solid at room temperature and have the formula
R² ₃SiO(SiR² ₂O)ᵣSiR² ₃ (II)
in which
each R² can be identical to or different from the others and denotes monovalent hydrocarbon radicals and
r is an integer having a value from 0 to 100,
with the proviso that at least one radical R² in formula (II) denotes a hydrocarbon radical having at least 18 carbon atoms, and
cyclic organopolysiloxanes of the formula
(R³ ₂SiO)₃ (III)
in which each R³ can be identical to or different from the others and denotes a hydrocarbon radical.

2. Polish according to Claim 1, characterized in that, to prepare the polish, organopolysiloxane which is solid at room temperature is used in amounts of 0.1 to 5.0 per cent by weight, relative to the total weight of the polish.

3. Polish according to one or more of Claims 1 to 2, characterized in that the organopolysiloxane which is solid at room temperature is used in the form of an aqueous emulsion.

4. Polish according to one or more of Claims 1 to 3, characterized in that, to prepare the polish, organopolysiloxane which is liquid at room temperature is used.

5. Polish according to one or more of Claims 1 to 4, characterized in that, to prepare the polish, added substances selected from the group consisting of non-silicon-containing waxes, thickeners, abrasives, preservatives and additives, such as scents and dyes, are used.

6. Polishes according to one or more of Claims 1 to 5, characterized in that they contain water in amounts of 85 to 99.9 per cent by weight, relative to the total weight of the polish.

7. Polishes according to one or more of Claims 1 to 6, characterized in that they contain no organic solvent.

8. Process for the polishing treatment of hard surfaces, characterized in that polish according to one or more of Claims 1 to 7 is applied to the hard surface.

9. Process according to Claim 8, characterized in that the hard surfaces are selected from the group consisting of metallic surfaces, coated surfaces and plastic surfaces.

10. Use of an aqueous agent as a polish for hard surfaces essentially containing no organic solvent, preparable using organopolysiloxanes which are solid at room temperature are those comprising units of the formula
Rₐ(R¹O)_{b}SiO_{(4-a-b)/2} (I)
in which
each R can be identical to or different from the others and denotes monovalent hydrocarbon radicals,
each R¹ can be identical to or different from the others and denotes a hydrogen atom or a hydrocarbon radical,
a is 0, 1, 2 or 3, on average 0.75 to 1.5, and
b is 0, 1, 2 or 3, on average 0.0 to 1.1,
with the proviso that the sum of a+b is smaller than or equal to 3.

## Revendications (Revendications pour l'(les) Etat(s) contractant(s) suivant(s): DE, FR, GB, IT)

1. Produits d'entretien pour surfaces dures, qui pour l'essentiel ne contiennent pas de solvant organique, pouvant être préparés en utilisant des organopolysiloxanes solides à la température ambiante, caractérisés en ce que les organopolysiloxanes qui sont solides à la température ambiante sont des organopolysiloxanes linéaires qui sont solides à la température ambiante et ont la formule
R² ₃SiO(SiR² ₂O)ᵣSiR² ₃ (II)
dans laquelle
chaque R² peut être identique à ou différent des autres et représente des radicaux hydrocarbonés monovalents et
r est un entier ayant une valeur de 0 à 100, avec la condition qu'au moins un radical R² dans la formule (II) désigne un radical hydrocarboné ayant au moins 18 atomes de carbone, 10-50% du nombre de radicaux R² étant des radicaux hydrocarbonés avec au moins 18 atomes de carbone, avec la condition que les composés de formules
(CH₃)₃SiO((CH₃)₂SiO)₃[(CH₃SiO(CH₂)₁₇CH₃)]₅Si(CH₃)₃
et
(CH₃)₃SiO((CH₃)₂SiO)₃[(CH₃SiO(CH₂)₁₉CH₃)]₅Si(CH₃)₃
sont exclus.

2. Produit d'entretien selon la revendication 1, caractérisé en ce que, pour préparer le produit d'entretien, on utilise un organopolysiloxane qui est solide à la température ambiante en des quantités de 0,1 à 5% en poids, par rapport au poids total du produit d'entretien.

3. Produit d'entretien selon une ou plusieurs des revendications 1 à 2, caractérisé en ce qu'on utilise l'organopolysiloxane qui est solide à la température ambiante sous forme d'une émulsion aqueuse.

4. Produit d'entretien selon une ou plusieurs des revendications 1 à 3, caractérisé en ce que, pour préparer le produit d'entretien, on utilise un organopolysiloxane qui est liquide à la température ambiante.

5. Produit d'entretien selon une ou plusieurs des revendications 1 à 4, caractérisé en ce que, pour préparer le produit d'entretien, on utilise des adjuvants sélectionnés dans le groupe comprenant des cires sans silicium, des épaississants, des abrasifs, des agents conservateurs et des additifs tels que les parfums et les colorants.

6. Produits d'entretien, selon une ou plusieurs des revendications 1 à 5, caractérisés en ce qu'ils contiennent de l'eau en quantités de 85 à 99,9% en poids, par rapport au poids total du produit d'entretien.

7. Produits d'entretien selon une ou plusieurs des revendications 1 à 6, caractérisés en ce qu'ils ne contiennent pas de solvant organique.

8. Procédé pour le traitement d'entretien de surfaces dures, caractérisé en ce que le produit d'entretien selon une ou plusieurs des revendications 1 à 7 est appliqué sur la surface dure.

9. Procédé selon la revendication 8, caractérisé en ce que les surfaces dures sont sélectionnées parmi le groupe comprenant les surfaces métalliques, les surfaces laquées et les surfaces plastiques.

10. Usage d'un agent aqueux comme produit d'entretien pour surfaces dures, qui pour l'essentiel ne contient pas de solvant organique, pouvant être préparé en utilisant des organopolysiloxanes qui sont solides à la température ambiante, caractérisé en ce que les organopolysiloxanes qui sont solides à la température ambiante sont ceux comprenant des unités de la formule
Rₐ(R¹O)_{b}SiO_{(4-a-b)/2} (I)
dans laquelle
chaque R peut être identique à ou différent des autres et désigne des radicaux hydrocarbonés monovalents,
chaque R¹ peut être identique à ou différent des autres et désigne un atome d'hydrogène ou un radical hydrocarboné
a est 0, 1, 2 ou 3, en moyenne 0,75 à 1,5, et
b est 0, 1, 2 ou 3, en moyenne 0,0 à 1,1,
avec la condition que la somme de a+b soit plus petite que ou égale à 3.

## Revendications (Revendications pour l'(les) Etat(s) contractant(s) suivant(s): AT, BE, CH, ES, LI, NL)

1. Produits d'entretien pour surfaces dures, qui pour l'essentiel ne contiennent pas de solvant organique, pouvant être préparés en utilisant des organopolysiloxanes qui sont solides à la température ambiante, caractérisés en ce que les organopolysiloxanes qui sont solides à la température ambiante sont ceux sélectionnés parmi le groupe comprenant des organopolysiloxanes linéaires qui sont solides à la température ambiante et ont la formule
R² ₃SiO(SiR² ₂O)ᵣSiR² ₃ (II)
dans laquelle
chaque R² peut être identique à ou différent des autres et désigne des radicaux hydrocarbonés monovalents et
r est un entier ayant une valeur de 0 à 100, avec la condition qu'au moins un radical R² dans la formule (II) désigne un radical hydrocarboné ayant au moins 18 atomes de carbone et
concerne des organopolysiloxanes cycliques de formule
(R³ ₂SiO)₃ (III)
dans laquelle R³ peut être identique ou différent et désigne un radical hydrocarboné.

2. Produit d'entretien selon la revendication 1, caractérisé en ce que, pour préparer le produit d'entretien, on utilise un organopolysiloxane qui est solide à la température ambiante en des quantités de 0,1 à 5,0% en poids, par rapport au poids total du produit d'entretien.

3. Produit d'entretien selon une ou plusieurs des revendications 1 à 2, caractérisé en ce qu'on utilise l'organopolysiloxane qui est solide à la température ambiante sous forme d'une émulsion aqueuse.

4. Produit d'entretien selon une ou plusieurs des revendications 1 à 3, caractérisé en ce que, pour préparer le produit d'entretien, on utilise un organopolysiloxane qui est liquide à température ambiante.

5. Produit d'entretien selon une ou plusieurs des revendications 1 à 4, caractérisé en ce que, pour préparer le produit d'entretien, on utilise des adjuvants sélectionnés dans le groupe comprenant des cires sans silicium, des épaississants, des abrasifs, des agents conservateurs et des additifs tels que les parfums et les colorants.

6. Produits d'entretien selon une ou plusieurs des revendications 1 à 5, caractérisés en ce qu'ils contiennent de l'eau en quantités de 85 à 99,9% en poids, par rapport au poids total du produit d'entretien.

7. Produits d'entretien selon une plusieurs des revendications 1 à 6, caractérisés en ce qu'ils ne contiennent pas de solvant organique.

8. Procédé pour le traitement d'entretien de surfaces dures, caractérisé en ce que le produit d'entretien selon une ou plusieurs des revendications 1 à 7 est appliqué sur la surface dure.

9. Procédé selon la revendication 8, caractérisé en ce que les surfaces dures sont sélectionnées parmi le groupe comprenant des surfaces métalliques, des surfaces laquées et des surfaces plastiques.

10. Usage d'un agent aqueux comme produit d'entretien pour surfaces dures, qui pour l'essentiel ne contient pas de solvant organique, pouvant être préparé en utilisant des organopolysiloxanes qui sont solides à la température ambiante, caractérisé en ce que les organopolysiloxanes qui sont solides à la température ambiante sont ceux reprenant des unités de la formule
Rₐ(R¹O)_{b}SiO_{(4-a-b)/2} (I)
dans laquelle
chaque R peut être identique à ou différent des autres et désigne des radicaux hydrocarbonés monovalents,
chaque R¹ peut être identique à ou différent des autres et désigne un atome d'hydrogène ou un radical hydrocarboné
a est 0, 1, 2 ou 3, en moyenne 0,75 à 1,5, et
b est 0, 1, 2 ou 3, en moyenne 0,0 à 1,1,
avec la condition que la somme de a+b soit plus petite que ou égale à 3.
